# EUROPEAN PATENT APPLICATION

(11) **EP 3 491 931 A1**
(43) Date of publication of application: **05.06.2019**
(21) Application number: 17204682.3
(22) Date of filing: 30.11.2017
(51) Int. Cl.: A23J 3/26, A23P 30/20, A23L 11/00, A23L 13/40, A23L 25/00

(54) **OILSEED MEAL IMPROVED FOOD PRODUCTS**

(71) Applicant: Südzucker AG, 68165 Mannheim (DE)
(72) Inventor: Dr. Liv Janvary, 67133 Maxdorf (DE)
(74) Representative: Schrell, Andreas

(57) **Abstract**

The present invention relates to a food product comprising a co-processed mixture, which mixture comprises at least one plant protein-containing composition and at least one oilseed meal, which is particularly useful as a meat extender or a meat analogue, products containing said food products and processes for obtaining them.

## Description

The present invention relates to a food product comprising a co-processed mixture, which mixture comprises at least one plant protein-containing composition and at least one oilseed meal, which is particularly useful as a meat extender or a meat analogue, products containing said food products and processes for obtaining them.

Today, meat and fish are the most common sources of food with high protein content. However, for a number of reasons, such as high costs, or health and religious concerns, there is a demand for a supply of proteins from other sources, namely plants. In addition, there is an increased requirement for sustainability and providing an increasing world population with enough and diverse amino acids, in particular based on animal proteins, becomes more and more problematic. It is thus, well-known to prepare meat-like food applications such as poultry, pork, beef or fish from plant proteins or plant proteins mixed with meat. Such plant-based compositions need to resemble meat also from an organoleptic point of view, which led to the development of textured products. Textured products comprising standard fillers, in particular wheat components such as Wheatmeat® or TruTex®, are frequently used for preparing meat-like foods.

In order for a meat analogue to be accepted by the consumer as such, it needs to have a similar flavor as well as a similar structure to meat. Obtaining a similar texture for meat is especially challenging for producing a meat analogue out of plant proteins. Meat has a complex 3-dimensional network of protein fibers that provide cohesion and firmness and that trap carbohydrates, fat and water. However, many available protein-rich meat analogues have a looser 3-dimensional network and less complex protein structures. In particular, they lack protein fibers or have a limited set of protein fibers that are aligned in one direction and in a single plane. Plant protein structures disassemble easily during chewing in the mouth and thus require less bite force as well as chewing time, producing a mouth feel similar rather to meal, rubber or sponges.

In order to produce a food product that has a similar texture to meat WO 2015/161099 A1 teaches to produce a meat structured protein product that has an alkaline pH of at least 7.05 and a moisture content of at least 30% by weight and wherein such a meat structured protein product further comprises protein fibers that are substantially aligned and comprise at least 5 weight-% of a non-animal protein material.

WO 2008/043076 A2 discloses processes to obtain structured plant protein products comprising soy isolate and wheat gluten using a specific pH-regime.

However, there is still an unmet demand for a meat analogue or meat extender providing a similar feeling in the mouth and eating experience as animal meat. Especially to provide a mouth feel that is not meal-, rubber- or sponge-like.

In addition, the industrial production of plant-oil faces a particular problem of making use of the by-product of oil production, namely oilseed meal.

The technical problem underlying the present invention is to provide products and processes to obtain meat analogue or meat extender products, which overcome the above identified disadvantages, in particular products, which are suitable as, preferably protein-rich, meat extenders or meat analogues that have a texture that more closely resembles meat, preferably which make use of an under-utilized by-product of plant-oil production, namely oilseed meal.

The present invention unexpectedly solves said technical problem by providing the teaching according to the independent claims, in particular by a teaching according to which at least one plant protein-containing composition and at least one oilseed meal is co-processed.

The present invention provides a food product comprising, in particular consisting of a co-processed mixture comprising, in particular consisting of:
a) 20 to 98 weight-% (based on dry weight of the food product) of at least one plant protein-containing composition and
b) 2 to 80 weight-% (based on dry weight of the food product) of at least one oilseed meal, wherein the oilseed meal is a seed, or a fruit oilseed meal and has a protein content from 25 to 55 weight-% (based on the total weight of the oilseed meal), a carbohydrate content of at most 15 weight-% (based on the total weight of the oilseed meal), and a fat content from 1 to 20 weight-% (based on the total weight of the oilseed meal).

Unexpectedly, oilseed meal, which has a protein content from 25 to 55 weight-% (based on the total weight of the oilseed meal), a carbohydrate content of at most 15 weight-% (based on the total weight of the oilseed meal), and a fat content from 1 to 20 weight-% (based on the total weight of the oilseed meal), and which is co-processed with at least one plant protein-containing composition, improves the structure of the at least one plant protein-containing composition so that it more closely resembles meat and reduces and/or eliminates a mouth feel that is meal-, rubber- or sponge-like. The use of oilseed meal is especially advantageous, because the oilseed meal is a, so far, under-utilized by-product of plant-oil production processes. The present invention provides inter alia the finding that the addition of oilseed meal has a stabilizing effect on the co-processing, in particular if the co-processing is co-extrusion. Without being bound by theory, this seems to be due to the fat contained in the oilseed meal and while too much fat, in particular in the oilseed meal, has a negative effect, the addition of some fat in the oilseed meal is beneficial for said use, especially if the plant protein-containing composition contains essentially no fat.

Food products of the present invention and food containing said products can be used to provide a fibrous, high-quality meat analogue similar to chicken or other meats of animal origin in appearance and mouth feel. Thus, the presently provided food products are particularly useful as meat extenders or meat analogues. The food products and the food of the present invention can be further processed into refrigerated, frozen, canned, ready-to-eat, hydrated, dehydrated or fried protein food. The present co-processed food products, in particular meat analogues and extenders, and the present food containing said food products, in particular meat extenders or analogue, have an improved texture compared to traditionally texturized vegetable proteins. The food product of the present invention is, thus, particularly useful as a partial or total meat replacement in conventional meat-based foods, in particular for human or animal consumption. The food product of the present invention may also be used as a food filler.

The co-processed mixture of the present invention is characterized by an improved mouth feel, in particular an improved mouth feel compared to the plant protein-containing composition alone and in comparison to a non-co-processed mixture of said two components, namely plant protein-containing composition and oilseed meal.

The co-processed mixture of the present invention is particularly characterized by an improved structure in comparison with a co-processed composition comprising 80 weight-% of gluten and 20 weight-% of rice flour, or 80 weight-% gluten and 20 weight-% wheat flour (based on the dry weight of the co-processed composition). The co-processed mixture is characterized particularly by an improved texture in comparison with a composition comprising the same quantity and quality of ingredients as the present composition, but not being co-processed. The co-processed mixture of the present invention has in particular an improved texture in comparison with a textured mixture of 80 weight-% gluten and 20 weight-% of rice flour or 80 weight-% gluten and 20 weight-% wheat flour.

In a preferred embodiment of the present invention, the improved texture is assessed by a taste panel comprising experienced panelists that can clearly differentiate between better or worse meat-like textures.

The food product of the present invention comprising a co-processed mixture is a structured food product, namely is a texturized, also called textured, food product and has a fibrosity, appearance and mouth feel comparable to a conventional meat product, in particular when hydrated.

In contrast to food products comprising merely gluten or soy as a protein source, such as 100 % gluten or soy protein, it is possible to provide food products with an unexpected improved texture.

In a preferred embodiment, the plant protein-containing composition in particular can be gluten, a pea protein-containing composition, a wheat protein-containing composition or soy protein-containing composition or two or three of these, or all four.

In a preferred embodiment of the present invention, the at least one plant protein-containing composition is gluten, a wheat protein containing composition or a pea protein-containing composition.

In a particularly preferred embodiment, the at least one plant protein-containing composition is gluten, preferably wheat gluten. In a particular preferred embodiment of the present invention, the at least one protein-containing composition is a soy protein composition. In a particular preferred embodiment, the at least one plant protein-containing composition is a pea protein-containing composition. In a particularly preferred embodiment, the at least one plant protein-containing composition is a wheat protein-containing composition.

In a preferred embodiment of the present invention, the at least one plant protein-containing composition is a mixture of a soy protein-containing composition and a wheat protein-containing composition. In a preferred embodiment of the present invention, the at least one plant-protein containing composition is a mixture of a soy protein-containing composition and a pea protein-containing composition, preferably without any soy protein. In a furthermore preferred embodiment of the present invention, the at least one plant protein-containing composition is a mixture of a wheat protein-containing composition and a pea protein-containing composition. In a furthermore preferred embodiment of the present invention, the at least one plant protein-containing composition is a mixture of a soy protein-containing composition, a wheat protein-containing composition and a pea protein-containing composition.

In a preferred embodiment of the present invention, the wheat protein-containing composition, the pea protein-containing composition and the soy protein-containing composition is a protein-containing composition derived from wheat, pea or soy respectively, in particular comprises at least 70 weight-%, preferably at least 80 weight-%, preferably at least 90 weight-% of wheat protein, pea protein, or soy protein respectively, in particular is a composition consisting essentially of wheat protein, pea protein or soy protein respectively, in particular is a composition consisting of wheat protein, pea protein or soy protein respectively.

In a preferred embodiment of the present invention, a pea protein-containing composition is pea protein. In a preferred embodiment of the present invention, a wheat protein-containing composition is wheat protein. In a preferred embodiment of the present invention, a soy protein-containing composition is soy protein.

In a preferred embodiment of the present invention, the at least one plant protein-containing composition is a composition containing 100 weight-% of a soy protein-containing composition, preferably at most 90 weight-%, preferably at most 80 weight-%, preferably at most 70 weight-%, preferably at most 60 weight-%, preferably at most 50 weight-%, preferably at most 40 weight-%, preferably at most 30 weight-%, preferably at most 20 weight-%, most preferably at most 10 weight-%.

In a preferred embodiment of the present invention, the at least one plant protein-containing composition is a composition containing at most 42 weight-%, preferably at most 38 weight-%, preferably at most 35 weight-%, preferably at most 32 weight-%, preferably at most 25 weight-%, preferably at most 16 weight-%, preferably at most 90 weight-%, preferably at most 85 weight-%, preferably at most 93 weight-% of a soy protein-containing composition.

In a preferred embodiment of the present invention, the at least one plant protein-containing composition contains essentially no soy protein-containing composition, preferably no soy protein-containing composition, in particular no soy protein.

In the context of the present invention, a plant protein-containing composition is a composition comprising, preferably consisting of, at least one plant protein or a mixture thereof. Preferably, the plant protein-containing composition is a composition comprising more than 50 weight-% plant protein, preferably 51 to 100 weight-%, preferably 51 to 99 weight-%, preferably 55 to 99 weight-%, preferably 60 to 90 weight-% or preferably 90 to 100 weight-% plant protein (based on the dry matter of the plant-protein containing composition). In a particular preferred embodiment, a plant protein-containing composition has a plant protein content of preferably 51, 55, 60, 70 or 80 to 98 weight-%, preferably 51, 60, 70, or 80 to 97 weight-%, preferably 51, 60, 70 or 80 to 96 weight-%, preferably 51, 55, 60, 65, 70, 75 or 80 to 85, 90, 95, 96, 97, 98 or 99 weight-%, preferably 60 to 90 weight-%, preferably 70 to 80 weight-%, preferably 51 to 60 weight-% or preferably 51 to 70 weight-% plant protein (each based on the dry matter of the plant protein-containing composition). Most preferably, the plant protein content of the plant protein-containing composition is from 90, 91, 92, 93, 94, 95, 96, 97 or 98 to 99 weight-%, preferably 90 to 98 weight-%, based on the dry matter of the plant protein-containing composition.

The term "gluten" as used herein, refers preferably to a water-insoluble protein fraction obtained from grain flour, preferably wheat flour, after aqueous extraction of non-protein parts and subsequent drying. Gluten is a protein fraction in cereal grain flour, such as wheat, rye or barley, that possesses a high content of protein, in particular gliadin and glutenin, as well as unique structural and adhesive properties.

Preferably, the protein content of gluten is from 65 to 95 weight-%, preferably 70 to 90 weight-%, most preferably 75 to 85 weight-%, in particular 80 weight-% based on dry weight of gluten (protein content is measured according to ISO 1871, Kjeldahl, using a conversion factor N*6.25). In a particular preferred embodiment gluten in dry form, preferably in particulate form, is used, preferably having a particle size according to which at most 2 % of the particles have a size greater than 0.2 mm, as determined according to DIN 66165, part 2, chapter 7 (mashing, sieving). In a particularly preferred embodiment, the gluten has a moisture content from 5 to 10 weight-%, preferably 6 to 9 weight-%, in particular 8 weight-% (based on the total weight of the gluten).

In a particularly preferred embodiment, the soy protein-containing composition is soy protein isolate or soy protein concentrate.

The term "soy protein concentrate" as used herein means preferably a soy material having a protein content of at least 60 weight-%, preferably having a protein content from 65 weight-% to 90 weight-% soy protein on a moisture-free basis. Soy protein concentrate preferably also contains soy cotyledon fiber, preferably from 3.5 % to 20 % soy fiber by weight on a moisture-free basis. The soy protein concentrate preferably is formed from soy beans by removing the hull and germ of the soybean, flaking or grinding the cotyledon and removing oil from the flaked or ground cotyledon, and separating the soy protein and soy cotyledon fiber from the soluble carbohydrates of the cotyledon.

The term "soy protein isolate" as used herein means preferably a soy material having a protein content of at least 91 weight-%, preferably 93 to 98 weight-% soy protein on a moisture-free basis. The soy protein isolate preferably is formed from soybeans by removing the hull and germ of the soy bean from the cotyledon, flaking or grinding the cotyledon and removing oil from the flaked or ground cotyledon, separating the soy protein and carbohydrates of the cotyledon from the cotyledon fiber and subsequently separating the soy protein from the carbohydrates.

The oilseed meal is obtainable, in particular obtained, from a seed or a fruit of an oilseed plant by mechanical de-oiling, in particular cold-pressing.

The term "oilseed plant" as used herein is a plant of which its seeds or fruits are harvested and processed for the production of oil. Said oil can be used not only for human or animal consumption, but also as or in bio-fuel, grease, lubricant, paint or cosmetics.

Said oilseed plant can be, but is not limited to, a rapeseed plant, in particular a canola plant, hemp, pumpkin, safflower, sunflower, sesame or linseed plant.

In a preferred embodiment of the present invention, said oilseed plant can be a soy plant.

In a preferred embodiment of the invention, the oilseed meal can be a meal selected from the group consisting of rapeseed meal, canola meal, soy meal, linseed meal, pumpkin meal, hemp meal, safflower meal, sunflower meal, sesame meal and combinations thereof. Linseed and/or sunflower meals are particularly preferred as an oilseed meal according to the invention.

In a preferred embodiment of the present invention, the oilseed meal can be a meal selected from the group consisting of rapeseed meal, canola meal, linseed meal, pumpkin meal, hemp meal, safflower meal, sunflower meal, sesame meal and combinations thereof. Linseed and/or sunflower meals are particularly preferred as an oilseed meal according to the invention.

In a preferred embodiment of the present invention, the oilseed meal contains essentially no soy meal, preferably no soy meal.

In a preferred embodiment of the present invention, the plant protein-containing composition and/or the oilseed meal, in particular the food product, contain no soy plant derived material, in particular no soy protein and no soy meal.

In a preferred embodiment of the present invention, the co-processed mixture comprises 21 to 98 weight-%, preferably 25 to 98 weight-%, preferably 30 to 98 weight-%, preferably 40 to 98 weight-%, preferably 50 to 80 weight-% or preferably 65 to 80 weight-% (based on the dry weight of the food product) of the at least one plant protein-containing composition.

In a furthermore preferred embodiment of the present invention, the co-processed mixture comprises 2 to 70 weight-%, preferably 2 to 60 weight-%, preferably 5 to 50 weight-%, preferably 5 to 40 weight-%, preferably 10 to 50 weight-%, preferably 10 to 40 weight-%, preferably 10 to 25 weight-%, preferably 30 to 80 weight-%, preferably 40 to 80 weight-%, preferably 30 to 70 weight-% or preferably 40 to 70 weight-% (based on the dry weight of the food product) of the oilseed meal.

In a particularly preferred embodiment, the at least one oilseed meal has a fat content of 8 to 18 weight-%, preferably 10 to 18 weight-%, preferably 12 to 18 weight-%, preferably 16 to 18 weight-%, preferably 8 to 16 weight-%, preferably 10 to 16 weight-%, preferably 12 to 16 weight-%, preferably 12 to 18 weight-%, preferably 12 to 16 weight-%, preferably 8 to 12 weight-%, preferably 8 to 10 weight-% (each based on the total weight of the oilseed meal).

In a particularly preferred embodiment of the present invention, the at least one oilseed meal has been defatted to a fat content of 2 weight-%, in particular 1 weight-% (based on the total weight of the oilseed meal).

In a particularly preferred embodiment, the at least one oilseed meal has a carbohydrate content of at most 15 weight-%, preferably at most 12 weight-%, preferably at most 10 weight-%, preferably at most 8 weight-%, preferably at most 5 weight-% (based on the total weight of the oilseed meal).

In a particularly preferred embodiment, the at least one oilseed meal has a carbohydrate content of 1 to 15 weight-%, preferably 5 to 15 weight-%, preferably 10 to 15 weight-%, preferably 12 to 15 weight-%, preferably 1 to 12 weight-%, preferably 1 to 10 weight-%, preferably 1 to 8 weight-%, preferably 1 to 5 weight-%, preferably 5 to 8 weight-%, preferably 5 to 10 weight-%, preferably 5 to 12 weight-%, preferably 5 to 15 weight-%, preferably 8 to 10 weight-%, preferably 8 to 12 weight-%, preferably 8 to 15 weight-% (each based on the total weight of the oilseed meal).

In a particularly preferred embodiment, the at least one oilseed meal has a protein content of preferably 30 to 55 weight-%, preferably 35 to 55 weight-%, preferably 40 to 55 weight-%, preferably 45 to 55 weight-%, preferably 50 to 55 weight-%, preferably 25 to 50 weight-%, preferably 25 to 40 weight-%, preferably 30 to 50 weight-%, preferably 35 to 50, preferably 40 to 50, preferably 45 to 50, preferably 30 to 45, preferably 35 to 45, preferably 40 to 45 weight-%, preferably 40 to 45, preferably 40 to 50 weight-%, preferably 45 to 50 weight-% (based on the total weight of the oilseed meal).

One particular aspect of the present invention is that the at least one plant protein-containing composition and the at least one oilseed meal are co-processed, in particular co-extruded, since the mere mixing of a plant protein-containing composition and an oilseed meal does not provide the advantages of the present invention, in particular of the present food product. Thus, the co-processing step required for providing the present food product not just aims to mix both components, but in addition provides a firm and well-defined structure, namely a texture, to the obtained food product.

Co-processing as used herein refers to a process step that uses as educts, hereinafter also termed starting materials, at least one plant protein-containing composition and at least one oilseed meal, which are subjected to conditions to produce a texturized food product, in particular being characterized by a favorable structure, such as a fibrous structure and/or non-stickiness after hydration.

Preferably, co-processing conditions are used which lead to mixing, hydration, shear, homogenization, compression, aeration, shaping, expansion and/or fiber formation of the educts used. The present invention requires in a preferred embodiment to use the parameters temperature, pressure and shear force so as to obtain in a co-processing of the educts the desired co-processed mixture, hereinafter also termed "texturate".

In a preferred embodiment, the educts used in the present invention are co-processed, in particular co-extruded, as dry mixtures.

In a preferred embodiment of the present invention, the term "co-extrusion" means that both compositions, namely the at least one plant protein-containing composition and the at least one oilseed meal, are extruded together and are mixed, in particular intensively mixed, with each other resulting in a product that comprises both compositions in a mixed and extruded state. Particularly preferred embodiments of a co-processing step are co-extruding and drum-drying.

The present invention provides in a particularly preferred embodiment a food product according to the above, wherein the co-processed mixture is a co-extruded mixture, hereinafter also termed "extrudate". Thus, in a preferred embodiment, the at least one plant protein-containing composition and the at least one oilseed meal are co-extruded so as to obtain a co-extruded mixture of the at least one plant protein-containing composition and the at least one oilseed meal. The obtained co-extruded mixture is thus a texturized mixture.

Advantageously, in preferred embodiments a high temperature, a reduced amount of added water, high mechanical energy input and a high shear can thus be employed. Preferably, the presently preferred thermoplastic extrusion uses a high pressure, such as 30 to 95 bar, and a high temperature, such as 120 °C to 180 °C. Such process allows melting the proteins and carbohydrates into incompatible phases that form a dispersion and contribute to the formation of fibrous structures in the obtained co-processed mixture.

In a particularly preferred embodiment of the present invention, a food product comprising a co-processed mixture is provided, wherein the co-processed mixture is prepared by
x) providing at least one plant protein-containing composition and at least one oilseed meal and
y) co-processing the at least one plant protein-containing composition and at least one oilseed meal so as to obtain a co-processed mixture of the at least one plant protein-containing composition and the at least one oilseed meal.

In a particularly preferred embodiment, the present invention further relates to a process for preparing a food product, in particular a food product of the present invention, comprising the following process steps:
x) providing at least one plant protein-containing composition and at least one oilseed meal,
y) co-processing the at least one plant protein-containing composition and the at least one oilseed meal so as to obtain a co-processed mixture, in particular a texturized mixture, of the at least one plant protein-containing composition and the at least one oilseed meal.

In a preferred embodiment of the present invention, a food product according to the invention consists of a co-processed mixture according to the invention.

In a furthermore preferred embodiment of the present invention, a food product according to the invention consists of the co-processed mixture obtained in step y).

In a particularly preferred embodiment of the present invention, additional food additives are provided in step x) and co-processed together with the at least one plant protein-containing composition and the at least one oilseed meal in step y).

In a particularly preferred embodiment of the present invention, the food product prepared according to a process of the present invention is a co-processed mixture obtained in step y).

In a preferred embodiment, said process for preparing a food is a process for preparing a food with an improved texture, in particular a reduced and/or eliminated meal-like, rubber-like or sponge-like mouth feel.

In a particularly preferred embodiment of the present invention, the co-processing of the at least one plant protein-containing composition and the at least one oilseed meal is co-extruding. Preferably, the extrusion is a thermoplastic extrusion.

Preferably, the at least one plant protein-containing composition and the at least one oilseed meal and optional food additives as provided in step x) are provided in dry form, preferably in powder form.

In a preferred embodiment of the present invention, the co-processing performed in step y) uses high temperatures and high pressures and high shear forces so as to obtain a co-processed mixture.

In a preferred embodiment of the present invention, the co-extruding is carried out in an extruder. In a preferred embodiment, the temperature of the co-processed mixture at the outlet of the extruder is from 120 to 200 °C, preferably 160 to 200 °C, preferably 160 to 180 °C and most preferably 170 °C.

Preferably, the device used for co-processing is an extruder, preferably a single screw or twin screw extruder or any other extruder system known to the skilled person.

A preferred extruder of the present invention is a double barrel, twin-screw extruder. Preferably, the extruder contains screws assembled from shafts and worm segments, as well as mixing lobe and ring-type shearing elements for extruding plant protein material.

In a furthermore preferred embodiment of the present invention, the pressure in the extruder is from 30 to 95 bar, preferably 50 to 80 bar and most preferably 60 to 75 bar.

In a preferred embodiment of the present invention, the pressure in the extruder is from 30 to 95 bar, preferably 50 to 80 bar, most preferably 60 to 75 bar and the temperature of the co-processed mixture at the outlet of the extruder is from 120 °C to 200 °C, preferably 160 °C to 200 °C, most preferably 160 to 180 °C.

In a preferred embodiment of the present invention, the pressure in the extruder is from 30 to 95 bar and the temperature of the co-processed mixture at the outlet of the extruder is from 120 °C to 200 °C.

In a preferred embodiment of the present invention, the pressure in the extruder is from 50 to 80 bar and the temperature of the co-processed mixture at the outlet of the extruder is from 120 °C to 200 °C.

In a preferred embodiment of the present invention, the pressure in the extruder is from 60 to 75 bar and the temperature of the co-processed mixture at the outlet of the extruder is from 120 °C to 200 °C.

In a preferred embodiment of the present invention, the pressure in the extruder is from 30 to 95 bar and the temperature of the co-processed mixture at the outlet of the extruder is from 120 °C to 200 °C, preferably 160 °C to 200 °C, most preferably 160 to 180 °C.

In a preferred embodiment of the present invention, the pressure in the extruder is from 50 to 80 bar and the temperature of the co-processed mixture at the outlet of the extruder is from 120 °C to 200 °C, preferably 160 °C to 200 °C, most preferably 160 to 180 °C.

In a preferred embodiment of the present invention, the pressure in the extruder is from 60 to 75 bar and the temperature of the co-processed mixture at the outlet of the extruder is from 120 °C to 200 °C, preferably 160 °C to 200 °C, most preferably 160 to 180 °C.

In one particularly preferred embodiment of the present invention, water is added during the co-processing step.

In a preferred embodiment of the present invention, at the co-processing step y), preferably at the beginning thereof, water is added (based on total weight of the starting materials, that means educts used in the co-processing process of the present invention).

In a preferred embodiment of the present invention, water is added to the co-processed mixture in an amount of 4 to 15 weight-%, preferably 4 to 12 weight-%, preferably 5 to 15 weight-%, preferably 5 to 10 weight-%, preferably 4 to 10 weight-%, preferably at most 10 weight-%, preferably at most 8 weight-%, most preferably at most 6 weight-%, preferably at most 5.8 weight-% (based on the total weight of the co-processed mixture). In a preferred embodiment of the present invention, water is added to the co-processed mixture in an amount from 0 to 10 weight-%, preferably 0 to 9 weight-%, preferably 0 to 8 weight-%, preferably 0 to 7 weight-%, preferably 1 to 6 weight-%, preferably 2 to 6 weight-%, preferably 2 to 5.9 weight-%, preferably 2.5 to 5.9 weight-%, preferably 3 to 5.8 weight-%, most preferably 4 to 5.7 weight-%, preferably 1 to 10 weight-%, preferably 1 to 9 weight-%, preferably 1 to 8 weight-%, preferably 1 to 7 weight-%, preferably 1 to 6.5 weight-%, preferably 1 to 5.9 weight-%, preferably 1 to 5.8 weight-%, preferably 1 to 5.7 weight-%, preferably 1 to 5.6 weight-%, most preferably 2 to 10 weight-%, preferably 2 to 9 weight-%, preferably 2 to 8 weight-%, preferably 2 to 7 weight-%, preferably 2 to 6.5 weight-%, preferably 2 to 5.9 weight-%, preferably 2 to 5.8 weight-%, preferably 2 to 5.7 weight-%, in particular 3 to 10 weight-%, preferably 3 to 9 weight-%, preferably 3 to 8 weight-%, preferably 3 to 7 weight-%, preferably 3 to 6 weight-%, preferably 4 to 10 weight-%, preferably 4 to 9 weight-%, preferably 4 to 8 weight-%, preferably 4 to 7 weight-%, preferably 4 to 6 weight-%, preferably 5 to 10 weight-%, preferably 5 to 9 weight-%, preferably 5 to 8 weight-%, preferably 5 to 7 weight-%, preferably 5 to 6 weight-%, preferably 5.4 or 5.5 weight-% of water (each based on the total weight of the co-processed mixture).

In a furthermore preferred embodiment of the present invention, the rotational speed of the extruder screw is from 200 to 1,800 rotations per minute (rpm), preferably 250 to 1,500 rpm, preferably 300 to 1,400 rpm, preferably 300 to 500 rpm, most preferably 350 rpm.

In a preferred embodiment of the present co-processing, preferably co-extrusion, the starting materials - also called educts -, preferably used in powder form, are co-processed in an amount of 40 to 100 kg/h, preferably 40 to 80 kg/h, in particular 50 to 60 kg/h, preferably 60 to 75 kg/h, preferably 70 kg/h. In a furthermore preferred embodiment of the present co-processing, preferably co-extrusion, process, 9.5 to 20 kg/h, in particular 10 to 15 kg/h, preferably 12 kg/h water is added into the process. In a furthermore preferred embodiment of the present invention, the total throughput in the presently preferred co-processing, preferably co-extrusion process is from 50 to 100 kg/h, preferably 50 to 80 kg/h.

A preferred extrusion process for the preparation of the present food product comprises introducing the plant protein-containing composition, the oilseed meal and optional other ingredients such as flavor or salt into a pre-mixer or a mixing tank, i.e. an ingredient blender, to combine the ingredients and to form a premix, comprising the plant protein-containing composition and the oilseed meal components a) and b), before having been extruded, preferably a dry premix.

The preferably employed pre-mixer preferably contains one or more pedals to promote uniform mixing of the plant protein-containing composition and oilseed meal and possibly other ingredients. The configuration and rotational speed of the pedals can vary, depending on the capacity of the pre-mixer. The premix is fed preferably into an extruder to heat, shear and ultimately plasticize the mixture.

The, preferably dry blended, premix is then preferably transferred to a hopper from which the ingredients are fed to an extruder in which the dry ingredients and injected water are mixed and heated under mechanical pressure generated by the screws of the extruder to form a molten extrusion mass. The molten extrusion mass exits the extruder through an extrusion die.

In a preferred embodiment, a pH-adjusting agent may be mixed with water to be injected into the extruder.

The screws of a twin-screw extruder can rotate within the barrel in the same or opposite directions. A rotation of the screws in the same direction is referred to as single flow or corotating, whereas rotation of the screws in opposite directions is referred to as double flow or counter-rotating. The speed of the screw or screws of the extruder may vary depending on the particular apparatus. In one preferred embodiment the speed can be from about 100 to about 450 rpm, preferably 350 rpm.

The extruder in a preferred embodiment comprises a plurality of heating zones through which the present protein/oilseed meal mixture a) and b) is conveyed under mechanical pressure prior to exiting the extruder through an extrusion die.

In a furthermore preferred embodiment of the present invention, the pressure, which results from the process and apparatus parameters obtained in the extruder, is from 30 to 95 bar, preferably 50 to 80 bar, and in particular 60 to 75 bar.

The barrel pressure depends on numerous factors including, for example, the extruder screw speed, feed weight of the mixture to the barrel, feed rate of water to the barrel, and the viscosity of the molten mass within the barrel. In a preferred embodiment, water is injected into the extruder barrel to the plant protein/oilseed meal mixture a) and b) and thereby promotes texturization of the proteins. As an aid in forming the molten extrusion mass, the water may act as a plasticizing agent. Water may be introduced into the extruder barrel via one or more injection jets. The rate of introduction of water can be controlled to promote production of an extrudate, i.e. the present co-processed mixture, having the aforementioned, desired characteristics.

A co-processed mixture has a preferred water content from 4 to 15 weight-%, preferably 4 to 12 weight-%, preferably 5 to 15 weight-%, preferably 5 to 10 weight-%, preferably 4 to 10 weight-% (each based on the total weight of the co-processed mixture) determined immediately after co-processing.

In a preferred embodiment of the present invention, the co-processed mixture obtained immediately after co-processing has a water content of at most 10 weight-%, preferably at most 8 weight-%, most preferably at most 6 weight-% (based on total weight of the co-processed mixture). In a preferred embodiment of the present invention, the co-processed mixture obtained immediately after processing has a water content from 0 to 10 weight-%, preferably 0 to 9 weight-%, preferably 0 to 8 weight-%, preferably 0 to 7 weight-%, preferably 1 to 6 weight-%, preferably 2 to 6 weight-%, preferably 2 to 5.9 weight-%, preferably 2.5 to 5.9 weight-%, preferably 3 to 5.8 weight-%, most preferably 4 to 5.7 weight-%, preferably 1 to 10 weight-%, preferably 1 to 9 weight-%, preferably 1 to 8 weight-%, preferably 1 to 7 weight-%, preferably 1 to 6.5 weight-%, preferably 1 to 5.9 weight-%, preferably 1 to 5.8 weight-%, preferably 1 to 5.7 weight-%, preferably 1 to 5.6 weight-%, most preferably 2 to 10 weight-%, preferably 2 to 9 weight-%, preferably 2 to 8 weight-%, preferably 2 to 7 weight-%, preferably 2 to 6.5 weight-%, preferably 2 to 5.9 weight-%, preferably 2 to 5.8 weight-%, preferably 2 to 5.7 weight-%, in particular 3 to 10 weight-%, preferably 3 to 9 weight-%, preferably 3 to 8 weight-%, preferably 3 to 7 weight-%, preferably 3 to 6 weight-%, preferably 4 to 10 weight-%, preferably 4 to 9 weight-%, preferably 4 to 8 weight-%, preferably 4 to 7 weight-%, preferably 4 to 6 weight-%, preferably 5 to 10 weight-%, preferably 5 to 9 weight-%, preferably 5 to 8 weight-%, preferably 5 to 7 weight-%, preferably 5 to 6 weight-%, preferably 5.4 or 5.5 weight-% of water (each based on total weight of the co-processed mixture).

Components a) and b) are, thus, subjected to shear and pressure by the extruder to plasticize the mixture. The screw elements of the extruder shear the mixture as well as create pressure in the extruder by forcing the mixture forward through the extruder and through the die. The screw motor speed is in a preferred embodiment set to a speed of about 100 rpm to about 1,800 rpm, preferably 200 to 1,800 rpm, preferably 200 to 500 rpm. In one embodiment, the screw's motor speed is about 300 to 500 rpm, preferably 100 rpm to about 400 rpm. In another embodiment, the screw motor speed is set at, preferably at around, 350 rpm.

Preferably, the extruder controls the temperature of the mixture as it passes through the extruder denaturing the protein and the mixture. Preferably, the extruder includes means for controlling the temperature of the mixture such as extruder barrel jackets into which heating or cooling, in the form of steam or chilled water, may be introduced to control the temperature of the mixture passing through the extruder. Preferably, the extruder may also include steam injection ports for directly injecting steam into the mixture within the extruder. In one embodiment, the extruder includes multiple heating zones that can be controlled to independent temperatures, wherein the temperatures of the heating zones are set to control the temperature of the mixture as it proceeds through the extruder. The temperature in each successive heating zone generally exceeds the temperature of the previous heating zone by about 10 °C to about 70 °C. In one embodiment, a dry or wet premix of the components a) and b) are fed into and transferred through 7 to 11, preferably 8 heating zones within the extruder with a protein/oilseed meal mixture. For example, the extruder may be set in an 8-temperature zone arrangement, where the first zone (adjacent to the extruder inlet port) is set to a temperature of about 20 °C to about 30 °C, the second zone is set to a temperature of about 30 to about 55 °C, the third zone is set to a temperature of 55 to about 75 °C, the fourth zone is set to a temperature of about 80 to 100 °C, the fifth zone is set to a temperature of about 120 to about 175 °C and the sixth up to the eighth zone is set to a temperature of about 160 to 200 °C, preferably 160 to 175 °C, (adjacent the extruder exit port). One skilled in the art may adjust the temperatures in one or more zones, or the number of zones to achieve the desired properties.

The mixture forms a melted plasticized mass in the extruder. Preferably, a die assembly is attached to the extruder in an arrangement that permits the plasticized mixture to flow from the extruder exit port into a long cooling die. Additionally, the cooling die produces substantial alignment of the protein fibers within the plasticized mixture as it flows through the die. The width and height of the cooling die are selected and set prior to extrusion of the mixture to provide the fibrous material extrudate with the desired dimensions. The width of the die aperture may be set so that the extrudate resembles a cubic chunk of meat or a steak filet, where widening the width of the die aperture decreases the cubic chunk-like nature of the extrudate and increases the filet-like nature of the extrudate. In one embodiment the width of the die aperture is set to a width of from about 2 mm to about 12 mm, or more specifically about 6 to 8 mm. The height dimension of the die aperture may be set to provide the desired thickness of the extrudate. The height of the aperture may be set to provide a very thin extrudate or a thick extrudate. The height of the aperture may be set to from about 1 mm to about 10 mm, and more specifically, from about 5 mm to about 9 mm. It is also contemplated that the die aperture may be circular. The diameter of the die aperture may be set to provide the desired thickness of the extrudate. The diameter of the aperture may be set to provide a very thin extrudate or thick extrudate. The diameter of the die aperture may be set to from about 1 mm to about 7 mm, and more specifically from about 3 to 5 mm. The length of the die may be from about 200 to about 500 mm, even more specifically from about 300 to about 400 mm. Chilled water, e.g. from about 2 to 8 °C, may be used as a cooling medium and circulated through the cooling die. In a preferred embodiment of the present invention, the extruder comprises one or more dies, preferably one die, preferably two dies.

The extrudate preferably can be cut after exiting the cooling die.

A dryer may optionally be used to dry the extrudate. The dryer, if one is used, generally comprises one or more drying zones. The extrudate will be present in the dryer for a time sufficient to produce an extrudate having the desired temperature and/or moisture content.

The extrudate, that means the co-processed mixture, produced in accordance with the present invention, comprises preferably protein fibers that are substantially aligned, preferably after hydration. As used herein, "substantially aligned", generally refers to the arrangement of protein fiber such that a significantly high percentage of the protein fibers of the structured plant protein product are contiguous to each other at less than approximately a 45° angle when viewed in a horizontal plane. Typically, on average at least about 55 % of the protein fibers comprising the structured plant protein product are substantially aligned. In another embodiment, on average at least about 60 % of the protein fibers are substantially aligned. In a further embodiment, on average at least about 70 % of the protein fibers are substantially aligned. In an additional embodiment, on average at least 80 % of the protein fibers are substantially aligned. In yet another embodiment, on average at least about 90 % of the protein fibers are substantially aligned. Methods for determining the degree of protein fiber alignment are known in the art and include a visual determination based upon photographs and micro-graphic images.

In a particularly preferred embodiment of the present invention, the co-processed mixture comprises at least one plant protein-containing composition and at least one oilseed meal, wherein the oilseed meal is used as a texturizer. In a particularly preferred embodiment, the oilseed meal as a texturizer is used in an amount of 15 to 80 weight-%, preferably 20 to 80 weight-%, preferably 30 to 80 weight-%, preferably 30 to 70 weight-%, preferably 40 to 60 weight-%, preferably 20 to 40 weight-% (each based on dry weight of the co-processed mixture).

In a preferred embodiment of the present invention, the co-processed mixture comprises at least one plant protein-containing composition and at least one oilseed meal, which is used as a colorant. In a particularly preferred embodiment, the at least one oilseed meal used as a colorant is used in an amount of 2 to 14 weight-%, preferably 2 to 12 weight-%, preferably 2 to 10 weight-%, preferably 2 to 7 weight-%, preferably 2 to 5 weight-% (each based on the dry weight of the co-processed mixture).

In a furthermore preferred embodiment, the food product or co-processed mixture of the present invention, in particular obtained in step y), is milled, preferably after hydration or preferably before hydration or preferably without any hydration.

Preferably, the food product is milled to obtain a fine powder.

In a furthermore preferred embodiment, the food product or co-processed mixture of the present invention, in particular obtained in step y) is crushed, preferably after hydration or preferably before hydration or preferably without any hydration.

In a preferred embodiment of the present invention, the food product or co-processed mixture of the present invention, in particular obtained in step y), is flaked. The flaked product of the present invention has the additional advantage that visually it still has a fibrous and meat-like appearance.

The present invention also provides a food product, which is obtainable, preferably obtained, according to any one of the processes according to the present invention.

In a particularly preferred embodiment, the food product of the present invention essentially consists of the co-processed mixture of the at least one plant protein-containing composition and the at least one oilseed meal.

In a furthermore preferred embodiment, the food product of the present invention consists of the co-processed mixture of the present invention, namely of the at least one plant protein-containing composition and the at least one oilseed meal. In a preferred embodiment of the present invention, the food product comprises the texturized co-processed mixture. In particular, the texturized co-extruded mixture is a texturized food product.

In a furthermore preferred embodiment, the food product of the present invention has a preferred water content from 4 to 15 weight-%, preferably 4 to 12 weight-%, preferably 5 to 15 weight-%, preferably 5 to 10 weight-%, preferably 4 to 10 weight-% (each based on the total weight of the food product).

In a preferred embodiment of the present invention, the food product has a water content of at most 10 weight-%, preferably at most 8 weight-%, most preferably at most 6 weight-% (based on the total weight of the food product).

In a preferred embodiment of the present invention, the food product has a water content from 0 to 10 weight-%, preferably 0 to 9 weight-%, preferably 0 to 8 weight-%, preferably 0 to 7 weight-%, preferably 1 to 6 weight-%, preferably 2 to 6 weight-%, preferably 2 to 5.9 weight-%, preferably 2.5 to 5.9 weight-%, preferably 3 to 5.8 weight-%, most preferably 4 to 5.7 weight-%, preferably 1 to 10 weight-%, preferably 1 to 9 weight-%, preferably 1 to 8 weight-%, preferably 1 to 7 weight-%, preferably 1 to 6.5 weight-%, preferably 1 to 5.9 weight-%, preferably 1 to 5.8 weight-%, preferably 1 to 5.7 weight-%, preferably 1 to 5.6 weight-%, preferably 2 to 10 weight-%, preferably 2 to 9 weight-%, preferably 2 to 8 weight-%, preferably 2 to 7 weight-%, preferably 2 to 6.5 weight-%, preferably 2 to 5.9 weight-%, preferably 2 to 5.8 weight-%, preferably 2 to 5.7 weight-%, preferably 3 to 10 weight-%, preferably 3 to 9 weight-%, preferably 3 to 8 weight-%, preferably 3 to 7 weight-%, preferably 3 to 6 weight-%, preferably 4 to 10 weight-%, preferably 4 to 9 weight-%, preferably 4 to 8 weight-%, preferably 4 to 7 weight-%, preferably 4 to 6 weight-%, preferably 5 to 10 weight-%, preferably 5 to 9 weight-%, preferably 5 to 8 weight-%, preferably 5 to 7 weight-%, preferably 5 to 6 weight-%, preferably 5.4 or 5.5 weight-% of water (each based on the total weight of the food product).

In a preferred embodiment of the present invention, the food product of the present invention comprises 1 to 99 weight-%, preferably 1 to 95 weight-%, preferably 1 to 90 weight-%, preferably 1 to 80 weight-%, preferably 1 to 70 weight-%, preferably 1 to 60 weight-%, preferably 1 to 50 weight-%, preferably 1 to 40 weight-%, preferably 1 to 30 weight-%, preferably 1 to 20 weight-%, preferably 1 to 10 weight-%, preferably 5, 10, 20, 30, 40, 50, 60, 70, 80 or 85 to 95 weight-%, preferably 10, 20, 30, 40, 50, 60, 70 or 80 to 90 weight-%, preferably 10 to 15, 20, 30, 40, 50, 60, 70, 80, 85, 90, 91, 92, 93, 94, 95, 96, 97, 98 or 99 weight-%, preferably 85, 86, 87, 88, 89 or 90 to 91, 92, 93, 94, 95, 96, 97, 98, 99 or 100 weight-% of the co-processed mixture (each based on the total weight of the food product).

In a preferred embodiment of the present invention, the co-processed mixture, the food product or the food of the present invention comprises at least one food additive. Such a food additive may be a taste modulating agent, a nutrient, a pH adjusting agent, a preservative, a thickening agent or a color.

In a preferred embodiment of the present invention, one or more food additives are added to the co-processed mixture before or during the co-processing step.

In a preferred embodiment of the present invention, a food product according to the invention comprises, preferably consists of, the co-processed mixture with one or more food additives, which have been added before or during the co-processing step.

In a preferred embodiment of the present invention, a food of the present invention comprises, preferably consists of, a co-processed mixture of the present invention and one or more food additives, which have been added to the co-processed mixture after the co-processing step.

In a preferred embodiment of the present invention, a food of the present invention comprises, preferably consists of, in addition to a food product according to the invention that comprises one or more food additives that have been added before or during the co-processing step, one or more food additives, which have been added to the food product after the co-processing step.

In a particularly preferred embodiment, the co-processed mixture, the food product or the food contains 0.1 to 5 weight-% (based on the dry weight of the food product or food) of at least one taste modulating agent. In a particularly preferred embodiment, the taste modulating agent is a flavor, a sweetener or a salt.

In a particularly preferred embodiment, the flavor is an animal meat flavor, an animal meat oil, spice extracts, spice oils, natural smoke solutions, natural smoke extracts, yeast extracts, and/or shiitake extract.

Additional flavors may include onion flavor, garlic flavor or herb flavors. The animal meat composition may further comprise a flavor enhancer. Examples of flavor enhancers that may be used include salt, for instance sodium chloride, glutamic acid salts, for instance monosodium glutamate, glycine salts, vanylic acid salts, inosinic acid salts, 5'-ribonucleotide salts, hydrolyzed proteins or hydrolyzed vegetable proteins.

In a particular preferred embodiment, the salt is a sodium salt, magnesium salt or calcium salt, in particular selected from the group consisting of calcium carbonate, calcium chloride, calcium gluconate, calcium lactate and combinations thereof.

In a particular preferred embodiment, the sweetener is a high-intensity sweetener, a sugar or a sugar replacement, such as sugar alcohols.

In the context of the present invention, the term "sweetener" refers to a substance providing sweetness to the consumer, in particular the human consumer. Such a "sweetener" may be a bulk sweetener, which provides a feeling of body and sweetness to the consumer, wherein the feeling of body refers to a sensation of particular texture and physical presence of said sweetener in the mouth of the consumer. A bulk sweetener according to the present invention may be a polyol, particularly a sugar alcohol, preferably a disaccharide alcohol, preferably isomalt.

Alternatively, a "sweetener" may also be an intensive sweetener, which solely provides sweetness, but does not provide a feeling of body to the consumer. Intensive sweeteners are used, due to their sweetening power, in tiny amounts.

In the context of the present invention, the terms "component, which provides sweetness" or "sweetening component" mean a "sweetener".

In a preferred embodiment of the present invention, the high intensity sweetener is aspartame, acesulfame K, sucralose, saccharine, glycyrrhicine, thaumatin, neohesperidin-dihydrochalkone, cyclamate, a stevia extract, steviol glycoside, stevioside, rebaudioside A, monellin, alitame or a combination thereof.

In a particular preferred embodiment, the sugar alcohol is isomalt, mannitol, sorbitol, xylitol, lactitol, erythritol or maltitol.

In the context of the present invention, the term "isomalt" preferably means isomalt ST, isomalt GS, an isomalt variant or a combination thereof. A specific embodiment of isomalt is known as Palatinit® or "hydrogenated palatinose".

In a particularly preferred embodiment, the sugar is sucrose, glucose, fructose, lactose, maltose, invert sugar, isomaltulose or trehalulose.

In a further embodiment, the food or food product or co-processed mixture of the present invention may further comprise a thickening or gelling agent, such as alginic acid and its salts, agar, carrageenan and its salts, processed Eucheuma seaweed, gums, for instance carob bean, guar, tragacanth or xanthan, pectins, sodium carboxymethylcellulose or modified starch.

In a further embodiment, the food or food product or co-processed mixture of the present invention may further comprise a nutrient such as a vitamin, a mineral, an antioxidant, an omega-3 fatty acid or a herb. Suitable vitamins include vitamins A, C and E, which are also antioxidants, and vitamins B and D. Examples of minerals that may be added include the salts of aluminium, ammonium, calcium, magnesium and potassium. Suitable omega-3 fatty acids include docosahexaenoic acid (DHA). Herbs that may be added include basil, celery leaves, chervil, chives, cilantro, parsley, oregano, tarragon and thyme.

In a furthermore preferred embodiment of the present invention, the food or food product or co-processed mixture may contain a pH-adjusting agent.

In a preferred embodiment of the present invention, the co-processed mixture is co-processed, in particular co-extruded, into rods, tubes, chunks, flakes, grains, nuggets or strips.

The present invention further provides a food comprising meat and the food product according to the present invention. In a preferred embodiment, the food comprising meat and the food product of the present invention is provided, wherein the ratio of the food product to the meat is from 1 to 49 parts of the food product, in particular from 1 to 40, in particular from 1 to 35, in particular from 1 to 30, in particular from 1 to 20, preferably 1 to 10 parts of the food product to 99 to 51 parts of the meat, in particular 99 to 60, preferably 99 to 65, preferably 99 to 70, preferably 99 to 80, in particular 99 to 90 parts of the meat, based on total weight of the food product and the meat present in the food. In this embodiment of the present invention, the food product of the present invention is used as partial meat replacement that means as meat extender.

In a preferred embodiment of the present invention, 30 to 80 volume-%, preferably 40 to 55 volume-%, most preferably 50 volume-% of a meat in a conventional meat-based product is replaced by the corresponding volume of the food product of the present invention, preferably in hydrated form.

In a preferred embodiment of the present invention, 5 to 40 volume-%, in particular 10 to 30 volume-%, preferably 10 volume-%, most preferably 30 volume-% of a meat in a conventional meat-based, preferably an emulsified product is replaced by the corresponding volume of the food product of the present invention, preferably in hydrated form.

In a furthermore preferred embodiment, there is provided a food comprising the food product according to the present invention and at least one food additive, wherein said food does not contain meat. Thus, in this preferred embodiment, the food product of the present invention is used as a total meat replacement, that means as a meat analogue.

In a furthermore preferred embodiment, there is provided a food comprising at least one food additive and the food product according to the invention, wherein the said food product according to the present invention is used as a filler.

The present food product may be processed into a variety of foods for either human or animal consumption. By way of non-limiting example, the food of the present invention may be an animal meat composition for animal or human consumption, preferably a food that simulates a ground meat product, a steak product, a sirloin tip product, a kebab product, a shredded product, a chunk meat product or a nugget product. In a furthermore preferred embodiment, the food according to the present invention is a burger, a sausage, a burrito, chili con carne, spaghetti Bolognese, sloppy joe or tacos. The foods of the present invention may be placed in a tray with overwrap, vacuum packed, canned or pouched, or frozen.

In a furthermore preferred embodiment, the present invention provides the use of an oilseed meal for improving the texture of a plant protein-containing composition, in particular gluten, a gluten-containing composition, pea protein, pea protein-containing composition, wheat protein or wheat protein-containing composition, soy protein or soy protein-containing composition.

In a furthermore preferred embodiment, the present invention provides the use of an oilseed meal for improving the texture of a plant protein-containing composition, in particular gluten, a gluten-containing composition, pea protein, pea protein-containing composition, wheat protein or wheat protein-containing composition.

In the context of the present invention, the term "comprising", preferably has a meaning of "containing" or "including" meaning that the composition in question at least comprises a specifically identified component without excluding the presence of further components. However, in a preferred embodiment the term comprising is also understood to have the meaning of "consisting essentially of" and in a most preferred embodiment of "consisting". The term "consisting essentially of" excludes the presence of substantial amounts of further components except the specifically identified components of the composition. The term "consisting" excludes the presence of any further component, no matter in which quantity, in the composition identified.

In the context of the present invention, the term "comprising essentially" preferably has the meaning that the specifically identified component is the component with the highest proportion in the composition in question compared to the other components present in the composition in question. However, in a preferred embodiment the term "comprising essentially" means that the composition in question comprises at least 50 weight-%, even more preferably at least 51 weight-% of the specifically identified component.

In the context of the present in invention, the term "at least one" preferably has a meaning that one component or more than one component, for example two, three or more components are present.

In the present teaching, reference to percent (%) is a reference to weight-%, unless otherwise specified. In the context of the present invention, all amounts, in particular relative amounts of components of a composition, do not exceed 100%, preferably add up to 100% based on either the dry matter of the composition or the overall weight of the composition, as indicated.

In the context of the present invention, protein concentrations and protein contents are determined according to ISO 1271, Kjeldahl using a conversion factor N*6.25, if not otherwise stated.

Further preferred embodiments of the present invention are the subject matter of the sub-claims.

The present invention is illustrated by the following figures and examples.

### Figures

- Figure 1: shows a photograph of a food product as standard reference (comprising a co-processed mixture comprising 80 weight-% gluten and 20 weight-% rice flour (each based on the total weight of the co-processed mixture)).
- Figure 2: shows a photograph of a food product according to the invention comprising a co-processed mixture comprising 80 weight-% gluten, 10 weight-% rice flour and 10 weight-% linseed meal (each based on the total weight of the co-processed mixture).
- Figure 3: shows a photograph of a food product according to the invention comprising a co-processed mixture comprising 80 weight-% gluten and 20 weight-% linseed meal (each based on the total weight of the co-processed mixture).
- Figure 4: shows a photograph of a food product according to the invention comprising a co-processed mixture comprising 70 weight-% gluten and 30 weight-% linseed meal (each based on the total weight of the co-processed mixture).
- Figure 5: shows a photograph of food products comprising a co-processed mixture comprising 80 weight-% gluten, 10 weight-% rice flour and 10 weight-% sunflower meal (left) and 80 weight-% gluten and 20 weight-% sunflower meal (right) (each based on the total weight of the co-processed mixture).
- Figure 6: shows a photograph of food products according to the invention. On the left a food product comprising a co-processed mixture comprising 80 weight-% pea protein and 20 weight-% linseed meal is shown, on the right a food product comprising a co-processed mixture comprising 70 weight-% pea protein and 30 weight-% linseed meal (each based on the total weight of the co-processed mixture) is shown.
- Figure 7: shows a photograph of a NaOH treated food product as a standard reference (comprising a co-processed mixture comprising 80 weight-% gluten (different batches) and 20 weight-% rice flour (each based on the total weight of the co-processed mixture)).
- Figure 8: shows a photograph of food products, treated with NaOH during the preparation, comprising a co-processed mixture comprising 80 weight-% gluten, 10 weight-% rice flour and 10 weight-% linseed meal (left), 80 weight-% gluten and 20 weight-% linseed meal (middle) and 70 weight-% gluten and 30 weight-% linseed meal (right) (each based on the total weight of the co-processed mixture).
- Figure 9: shows a photograph of food products, treated with NaOH during the preparation, comprising a co-processed mixture comprising 80 weight-% gluten, 10 weight-% rice flour and 10 weight-% sunflower meal (left) and 80 weight-% gluten and 20 weight-% sunflower meal (right) (each based on the total weight of the co-processed mixture).
- Figure 10: shows a photograph of food products. On the left a reference food product comprising a co-processed mixture comprising 40 weight-% gluten, 40 weight-% pea protein and 20 weight-% rice flour is shown and on the right a food product according to the invention comprising a co-processed mixture comprising 40 weight-% gluten, 40 weight-% pea protein, 10 weight-% rice flour and 10 weight-% linseed meal (each based on the total weight of the co-processed mixture).

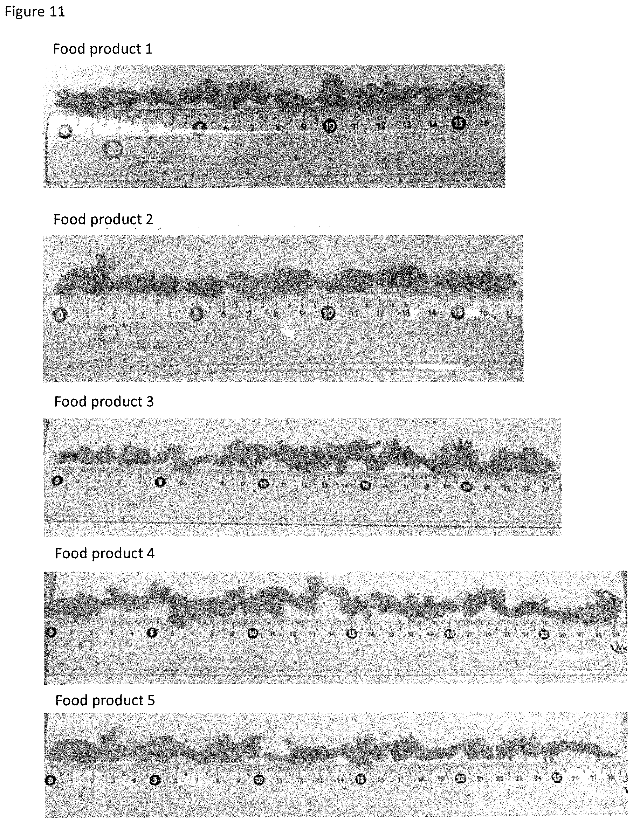

- Figure 11: shows photographs of the measurement of the fiber length of different food products. The first photograph shows the reference food product (comprising a co-processed mixture comprising 80 weight-% gluten (different batches) and 20 weight-% rice flour). The second and following images show food products according to the invention. The food product shown in the second photograph comprises a co-processed mixture comprising 80 weight-% gluten, 10 weight-% rice flour and 10 weight-% linseed meal, the food product shown in the third comprises a co-processed mixture comprising 80 weight-% gluten and 20 weight-% linseed meal, the food product shown in the third 70 weight-% gluten and 30 weight-% linseed meal, the food product shown in the fourth comprises a co-processed mixture comprising 80 weight-% gluten, 10 weight-% rice flour and 10 weight-% sunflower meal and the food product shown in the fifth comprises a co-processed mixture comprising 80 weight-% gluten and 20 weight-% sunflower meal (each based on the total weight of the co-processed mixture).

### Examples

### Example 1:

### 1.1 Recipes

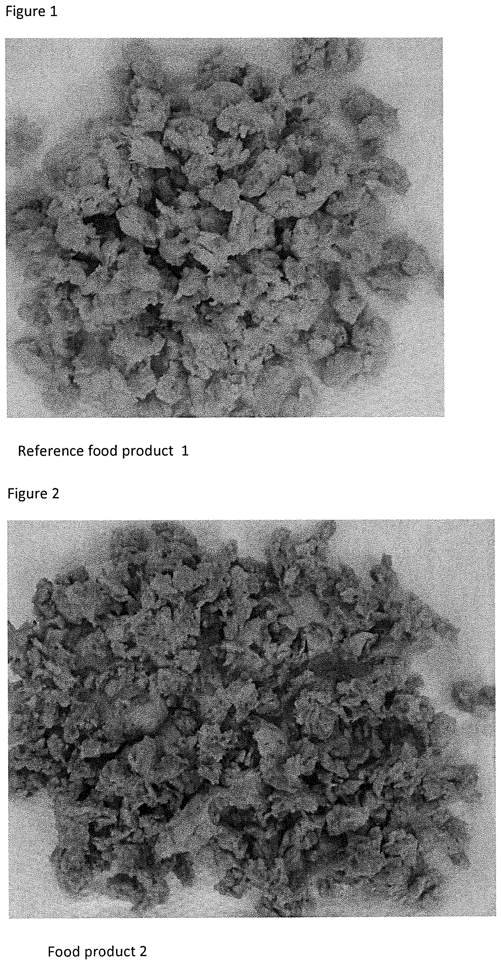

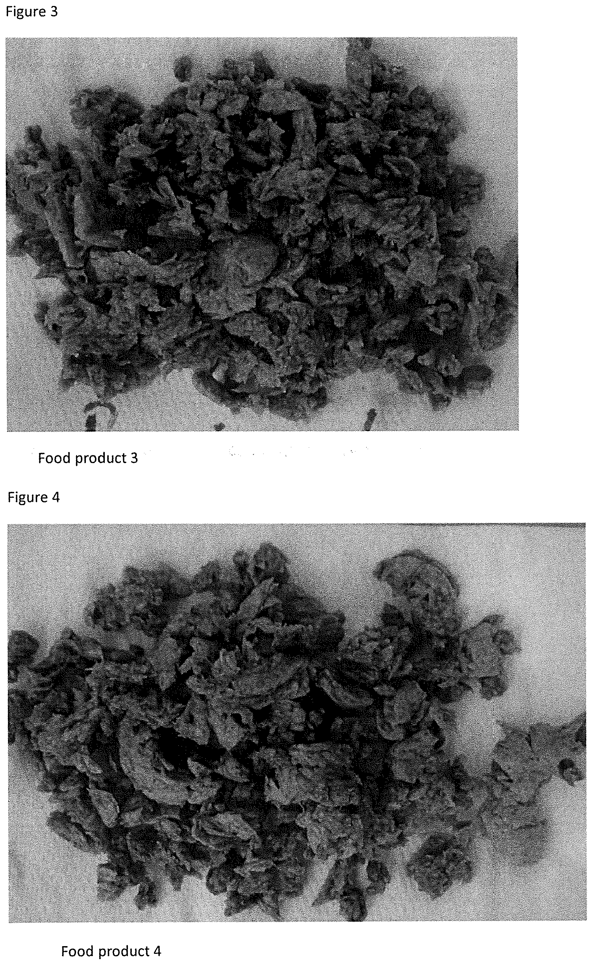

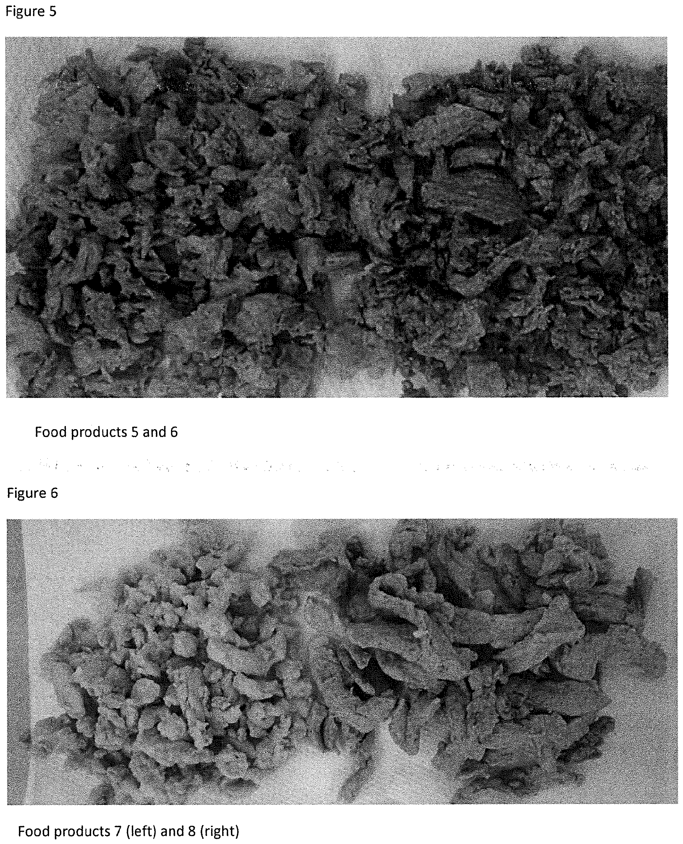

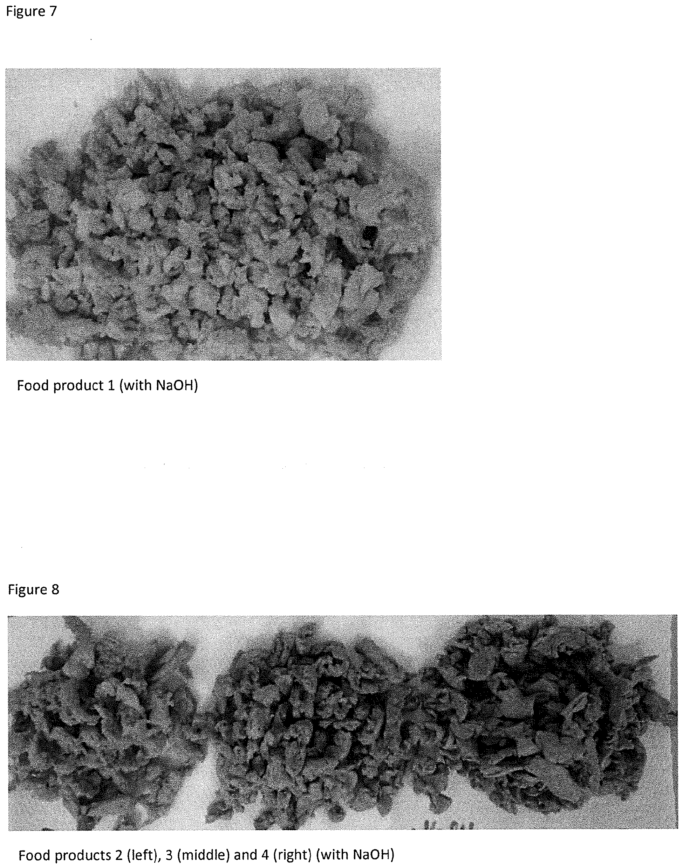

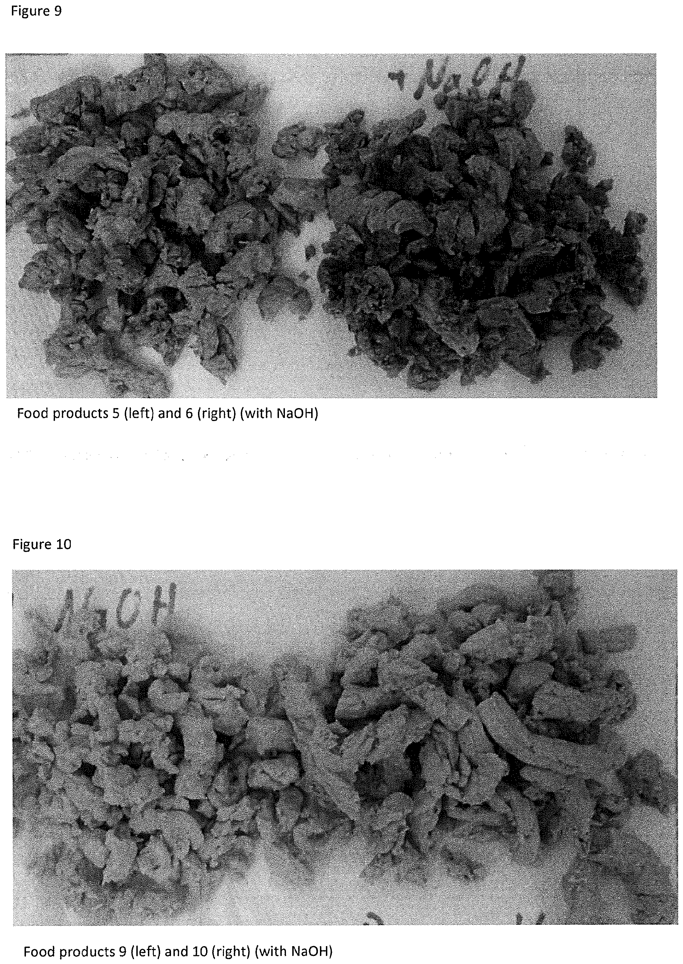

In the following example, various food products according to the invention with the following designations and mixtures comprising a co-processed mixture comprising the following (with and without addition of NaOH during the preparation) have been prepared:
1: Standard reference (80 weight-% gluten and 20 weight-% rice flour) (Figures 1 and 7)
2: 80 weight-% gluten, 10 weight-% rice flour and 10 weight-% linseed meal (Figures 2 and 8)
3: 80 weight-% gluten, 20 weight-% linseed meal (Figures 3 and 8)
4: 70 weight-% gluten and 30 weight-% linseed meal (Figures 4 and 8)
5: 80 weight-% gluten, 10 weight-% rice flour, 10 weight-% sunflower meal (Figures 5 and 9)
6: 80 weight-% gluten and 20 weight-% sunflower meal (Figures 5 and 9)

In addition, various food products according to the invention with the following designations and mixtures comprising a co-processed mixture comprising the following (only without addition of NaOH) have been prepared:
7: 80 weight-% pea protein and 20 weight-% linseed meal (Figure 6)
8: 70 weight-% pea protein and 30 weight-% linseed meal (Figure 6)

Furthermore, various food products according to the invention with the following designations and mixtures comprising a co-processed mixture combined with the following (only with addition of NaOH during the preparation) have been prepared:
9: 40 weight-% gluten, 40 weight-% pea protein and 20 weight-% rice flour (Figure 10)
10: 40 weight-% gluten, 40 weight-% pea protein, 10 weight-% rice flour and 10 weight-% linseed meal (Figure 10)

### 1.2 Preparation protocol

The mixtures according to 1.1 were prepared in a Theysson twin-screw extruder. A total dry mix of 15 kg of throughput was prepared with the addition of 15 weight-% water. The rotation speed of the extruder screws was set to 350 rotations per minute. An outlet die with a diameter of 3.5 mm was used.

The extruder was used with 8 heating zones with the following temperature profile: first zone 20°C, second and third, 55°C, fourth zone 100°C, fifth, sixth and seventh heating zone 175°C and eighth heating zone 165°C.

### 1.3 Fiber length of the different food products

The length of fiber according to the present invention is the mean of the length of individual pieces per food product. To determine the length of fibers of each food product, 10 individual pieces were lined in a row and each individual piece as well as the total length of the pieces was measured.

According to Table 1, the individual length of each piece as well as the total length and the average length of the individual pieces per food product, i.e. the fiber length, was significantly longer for each food product comprising oilseed meal (food products 2-5 without NaOH)(Figure 11).

**Table 1**

| Piece/Food product | 1 | 2 | 3 | 4 | 5 |
|---|---|---|---|---|---|
| 1 [mm] | 16 | 15 | 30 | 34 | 26 |
| 2 [mm] | 14 | 20 | 25 | 40 | 24 |
| 3 [mm] | 12 | 20 | 28 | 26 | 30 |
| 4 [mm] | 20 | 16 | 20 | 28 | 24 |
| 5 [mm] | 12 | 10 | 34 | 30 | 38 |
| 6 [mm] | 15 | 17 | 25 | 30 | 24 |
| 7 [mm] | 17 | 17 | 24 | 31 | 28 |
| 8 [mm] | 17 | 18 | 18 | 24 | 27 |
| 9 [mm] | 14 | 17 | 19 | 24 | 19 |
| 10 [mm] | 18 | 16 | 21 | 35 | 41 |
| Total length [mm] | 155 | 166 | 244 | 302 | 281 |
| Average length [mm] | 16 | 17 | 24 | 30 | 28 |

### 1.4 Water holding capacity of standard processed and pH adjusted food products

The water holding capacity (WHC) of each food product was measured according to the following method:
15 g of dry food product was allowed to soak water in a beaker with an excess amount of water for 15 minutes. The excess of water was afterwards removed and the product was drained on a sieve for 30 seconds and the hydrated product was weighted. The water holding capacity was determined by subtracting the weight of the dry food product from the weight of the hydrated food product and the result was divided by the weight of the dry food product x 100.

The water holding capacity of the food products 3 to 7 was significantly higher compared to food product number 1, the standard reference food product. The water holding capacity was in general higher when more oilseed meal was in the food product that was processed according to the standard process described in 1.2. While the water holding capacity of the food products with the pH adjusted mixture was in general higher than the standard food product, the amount of oilseed meal did not correlate with the level of the water holding capacity (see Table 2).

**Table 2**

| Food product | WHC (%) |
|---|---|
| 1 | 101,2 |
| 2 | 121,0 |
| 3 | 131,7 |
| 4 | 156,3 |
| 5 | 146,2 |
| 6 | 154,4 |
| 7 | 197,8 |
| 8 | 205,2 |
| | |
| 1 (with NaOH) | 141,3 |
| 2 (with NaOH) | 179,5 |
| 3 (with NaOH) | 185,0 |
| 4 (with NaOH) | 181,5 |
| 5 (with NaOH) | 202,0 |
| 6 (with NaOH) | 161,5 |
| 9 (with NaOH) | 231,9 |
| 10 (with NaOH) | 293,8 |

### 1.5 Sensorial evaluation of the different food products

| Food Product | Sensorial Evaluation |
|---|---|
| 1 (Figure 1) | - Short fibers only partially aligned |
| | - Soft texture |
| 2 (Figure 2) | - Improved fibrousness from addition of linseed meal (10 weight-%; unchanged gluten content compared to standard reference) |
| | - Longer fibers more regularly aligned results in stronger texture |
| 3 (Figure 3) | Replacing rice flour (carbohydrate source) by linseed meal without a substantially longer and aligned protein fibers |
| 4 (Figure 4) | Further improvement of protein length and alignment by increasing |
| | linseed meal addition (unchanged protein content compared to Reference) |
| 5 (Figure 5) | Improved fiber length and alignment from addition of sunflower meal |
| 6 (Figure 5) | Further improvement of fiber length and alignment from addition of 20 weight-% sunflower meal |
| 7 (Figure 6) | Pea protein processed with standard source of carbohydrates (standard reference) |
| 8 (Figure 6) | Improved fiber length and orientation from using oilseed meal instead of carbohydrate source (replacing rice flour with linseed meal; total protein remains unchanged) |
| 1 + NaOH (Figure 7) | pH adjustment results in improved fiber length and alignment |
| 2 + NaOH (Figure 8) | Improved fiber length and alignment from using linseed meal ( compared to food product 1 + NaOH) |
| 3 + NaOH (Figure 8) | Further improvement of fiber lengths and alignment from using 20 weight-% of linseed meal (gluten content unchanged) |
| 4 + NaOH (Figure 8) | Further improvement of fiber lengths and alignment of fibers from using increasing 30 weight-% of oilseed meal (protein content unchanged compared to food product 1 + NaOH) |
| 5 + NaOH (Figure 9) | Improved fiber length and fiber alignment (compared to food 1 + NaOH) |
| 6 + NaOH (Figure 9) | Further improvement of fiber length and alignment of fibers (compared to food 1 + NaOH) |
| 9 + NaOH (Figure 10) | - Standard reference for composition 10 |
| | - Improved fiber length and alignment as compared to food product 1 |
| 10 + NaOH (Figure 10) | Further improvement of fiber length and fiber alignment by exchanging carbohydrate source (rice flour) partially with linseed meal |

### Example 2

### Vegetarian product comprising the food product according to the invention

A vegetarian food product was prepared according to the following recipe:
Food product according to the invention 317 g, vegetable broth 475 g, whole egg powder 85 g, Remyline® AX-DR 50 g, salt, 12 g, white pepper 1 g, dextrose 10 g, Orafti® HP gel (20%) (Silverson) 50 g.

The texture was pre-hydrated with vegetable broth for 30 minutes. Afterwards, the texturized, pre-hydrated protein was mixed with Orafti® HP gel for 1 minute and thereafter with starch (Remyline® AX-DR), salt, pepper, dextrose and again mixed for 1 minute. Then the whole egg powder was added and mixed in for 1 minute and 30 seconds. After that, the mixture was poured into a silicon mold with a diameter of 78 mm and deep-frozen.

### Example 3

### Extended meat products

Different products comprising the food product according to the invention as well as meat were prepared.

### 3.1 Nuggets

The following ingredients were used for the meat patty of the nuggets:
chicken breast 52.5 weight-%, chicken skin 20 weight-%, texturized food product according to the invention 7.5 weight-%, dextrose 2.7 weight-%, salt 1 weight-%, phosphate salt 0.3 weight-%, water 26 weight-%, batter mix Sfinc S0488943 weight-% and water 57 weight-%.

Preparation of coated nuggets:
The chicken breast and chicken skin were separately ground to 8 mm and 3 mm, respectively. Then, the chicken breast and chicken skin were mixed for one minute with the Hobart robot at a speed of 1. Salt, phosphate and dextrose were added and mixed for 30 seconds with a speed of 1, and afterwards water was added and mixed again for two minutes at a speed of 1. Silicon molds with a diameter of 38 mm and height of 10 mm were filled and placed in a deep freezer until the next day. The next day, the meat patties were taken out of the mold and incubated for 5 minutes at room temperature. Each patty was then dipped into a pre-dust (Sfinc dry fiber S07366) and cooked for 7.5 minutes at 120 °C with steam. Afterwards, each patty was dipped again in pre-dust, then in batter mix and afterwards rolled in bread crumbs. Then the coated nuggets were pre-fried at 190 °C for 50 seconds and afterwards deep-frozen. The deep-frozen coated nuggets were then deep-fried at 190 °C for 3.5 minutes or cooked in an oven with 180 °C with convection for 8 minutes on each side.

### 3.2 Meat burgers extended with food product according to the invention

Two different burger patty compositions were prepared. A standard burger patty containing 98.5 weight-% beef, 1.2 weight-% salt and 0.3 weight-% pepper, as well as a burger with a texturated food product according to the invention with 49.25 weight-% beef, texturated food product 16.4 weight-%, 32.85 weight-% water, 1.2 weight-% salt and 0.3 weight-% pepper.

The meat and the pre-hydrated texturated food product (pre-hydration for 15 minutes in water) were mixed in a Hobart robot (stand 1, K blender) for one minute. Then, the meat for the pure meat reference patty as well as the mixture of meat and texturated food product were ground with a 3 mm plate. Thereafter, burgers with 30 g per burger patty were prepared, frozen overnight or for at least 4 h and then placed on enamel plate with baking paper and the burgers were baked in a pre-heated oven at 240 °C until a core temperature of the burger patties of 78 °C was reached.

## Claims

1. Food product comprising a co-processed mixture of:
a) 20 to 98 weight-% (based on dry weight of the food product) of at least one plant protein-containing composition and
b) 2 to 80 weight-% (based on dry weight of the food product) of at least one oilseed meal, wherein the oilseed meal is a seed or a fruit oilseed meal and has a protein content from 25 to 55 weight-% (based on the total weight of the oilseed meal), a carbohydrate content of at most 15 weight-% (based on the total weight of the oilseed meal) and a fat content from 1 to 20 weight-% (based on the total weight of the oilseed meal).

2. The food product according to claim 1, wherein the co-processed mixture is prepared by
x) providing at least one plant protein-containing composition and at least one oilseed meal and
y) co-processing the at least one plant protein-containing composition and at least one oilseed meal so as to obtain a co-processed mixture of the at least one plant protein-containing composition and the at least one oilseed meal.

3. The food product according to any one of the claims 1 or 2, wherein the co-processed mixture is a co-extruded mixture.

4. The food product according to claim 1, wherein the oilseed meal-containing composition is a canola meal, hemp meal, pumpkin seed meal, rapeseed meal, safflower meal, sunflower meal, soy meal, sesame meal or linseed meal.

5. The food product according to claim 1, wherein the oilseed meal-containing composition is a canola meal, hemp meal, pumpkin seed meal, rapeseed meal, safflower meal, sunflower meal, sesame meal or linseed meal.

6. The food product according to any one of the preceding claims, wherein the oilseed meal has a fat content of 8 to 18 weight-% (based on the total weight of the oilseed meal).

7. The food product according to any one of the preceding claims, wherein the oilseed meal has been defatted to a fat content of 2 weight-% (based on the total weight of the oilseed meal).

8. The food product according to any one of the preceding claims, wherein the oilseed meal is obtainable by mechanical de-oiling, in particular cold pressing, a seed or a fruit from an oilseed plant.

9. The food product according to any one of the preceding claims, wherein the food product comprises oilseed meal as a colorant in an amount of 2 to 14 weight-% (based on dry weight of the food product).

10. The food product according to any one of the preceding claims, wherein the food product comprises oilseed meal as a texturizer in an amount of 15 to 80 weight-% (based on dry weight of the food product).

11. The food product according to any one of the preceding claims, wherein the at least one plant protein-containing composition is a wheat protein-containing composition, or a pea protein-containing composition, or a soy protein-containing composition, or gluten.

12. The food product according to any one of the preceding claims, wherein the at least one plant protein-containing composition is a wheat protein-containing composition, or a pea protein-containing composition, or gluten.

13. The food product according to any one of the preceding claims, wherein the food product contains 0.1 to 5 weight-% (based on dry weight of the food product) of at least one food additive, in particular of at least one taste-modulating agent.

14. The food product according to any one of the preceding claims, wherein the at least one taste-modulating agent is a flavor, a sweetener or a salt.

15. The food product according to any one of the preceding claims, wherein the mixture is processed into rods, tubes, chunks, flakes, grains, nuggets or strips.

16. A process for preparing a food product comprising a co-processed mixture according to anyone of claims 1 to 15, wherein the co-processed mixture is prepared by
x) providing at least one plant protein-containing composition and at least one oilseed meal and
y) co-processing the at least one plant protein-containing composition and at least one oilseed meal so as to obtain a co-processed mixture of the at least one plant protein-containing composition and the at least one oilseed meal.

17. A food comprising meat and the food product according to any one of claims 1 to 15, wherein the ratio of the meat to the food product is from 1 to 50 parts of the food product to 99 to 50 parts of the meat (based on the total weight of meat and food product present in the food).

18. A food comprising the food product of any one of claims 1 to 15 and at least one food additive, wherein said food does not contain meat.

19. The food according to any one of claims 17 or 18, which simulates a ground meat product, a steak product, a sirloin tip product, a kebab product, a shredded product, a cutlet product, a chunk meat product, a nugget product, a burger, a sausage, a burrito, chili con carne, spaghetti Bolognese, sloppy joe or tacos.

20. A food comprising meat and the food product according to any one of claims 1 to 17, wherein the ratio of the meat to the food product is from 1 to 49 parts of the food product to 51 to 99 parts of the meat (based on the total weight of meat and food product present in the food).

21. Use of oilseed meal for improving the texture of a plant protein-containing composition, in particular gluten, a gluten-containing composition, pea protein, pea protein-containing composition, wheat protein, wheat-protein-containing composition, soy protein or soy protein-containing composition.

22. Use of oilseed meal for improving the texture of a plant protein-containing composition, in particular gluten, a gluten-containing composition, pea protein, pea protein-containing composition, wheat protein, wheat-protein-containing composition.
